# EUROPEAN PATENT SPECIFICATION

(11) **EP 4 552 914 B1**
(45) Date of publication and mention of the grant of the patent: **30.09.2026**
(21) Application number: 24177984.2
(22) Date of filing: 24.05.2024
(51) Int. Cl.: B60L 53/63, B60L 53/66, B60L 53/67, B60L 53/68, H02J 7/00, B60L 53/62, H02J 3/14, H02J 3/26, H02J 3/32

(54) **METHOD AND SYSTEM OF CHARGING ELECTRIC VEHICLE IN AN ELECTRIC VEHICLE CHARGING STATION**
VERFAHREN UND SYSTEM ZUM LADEN EINES ELEKTROFAHRZEUGS IN EINER ELEKTROFAHRZEUGLADESTATION
PROCÉDÉ ET SYSTÈME DE CHARGE DE VÉHICULE ÉLECTRIQUE DANS UNE STATION DE CHARGE DE VÉHICULE ÉLECTRIQUE

(30) Priority: 09.11.2023 SG 10202303192S; 10.04.2024 US 202418631082
(43) Date of publication of application: 14.05.2025
(73) Proprietor: Lite-On Singapore Pte. Ltd., Singapore 556741 (SG)
(72) Inventor: KOW, Ken-Weng, 556741 Singapore (SG); HAMIMAH, Binte Ahmad Jefri, 556741 Singapore (SG); ZHONG, Zhi-Ming, 556741 Singapore (SG); YANG, Jing, 556741 Singapore (SG); LAU, En Cheng Benjin, 556741 Singapore (SG)
(74) Representative: dompatent

(56) References cited:
- US-A1- 2022 215 488
- US-A1- 2022 348 105
- US-B2- 11 130 421
- US-B2- 8 509 976

## Description

### TECHNICAL FIELD

The disclosure relates to a method and system of charging electric vehicle (EV) in an electric vehicle charging station.

### BACKGROUND

International endeavors aimed at mitigating global warming have commenced, propelling the advancement of electric vehicles (EVs) towards the objective of obviating fuel consumption. The charging equipment industry is noticing the trend toward vehicle electrification and is actively establishing a growing number of charging stations designed to facilitate broader access for drivers to charge their EVs.

As EVs become increasingly prevalent, there arises a pressing need for efficient energy demand management. The charging of EVs may result in considerable stain on the grid infrastructure, especially during peak hours when the demand for energy is quite high. For example, the charging of EVs may lead to an increase in the load on the grid, exceeding its designed capacity in certain areas or at certain times. Such a scenario could result in issues like grid overload, voltage instability, or equipment damage, thereby affecting the stable operation of the grid. Therefore, managing the charging of EVs is needed to reduce the strain on the grid infrastructure and ensure the reliability and stability of the power system. US 8 509 976 B2 discloses method and system for charging an EV at an electric vehicle charging station equipped with a plurality of electric vehicle supply equipments EVSEs, under control of two controllers based on a total power consumption of the EVSEs.

Besides, efforts to minimize or potentially eliminate the costs associated with infrastructure upgrade are also necessary.

### SUMMARY

According to one embodiment of the disclosure, a method for charging electric vehicle (EV) at an electric vehicle charging station equipped with a number of electric vehicle supply equipments (EVSEs) is provided. The method includes the following steps. Charging at least one EV by the EVSEs is performed under control of a cloud controller. Whether a total power consumption corresponding to the EVSEs is equal or larger than X% of a maximum power capacity is determined. X is a real number between 1 and 100. When the total power consumption corresponding to the EVSEs is equal or larger than X% of the maximum power capacity, amount of power for each EVSE is recalculated by an edge controller and the recalculated amount of power is assigned to each EVSE by the edge controller for charging the at least one EV by the EVSEs under control of the edge controller. Charging information of each EVSE is sent to the cloud controller by the edge controller when performing charging the at least one EV by the EVSEs under control of the edge controller.

According to another embodiment of the disclosure, a system for charging EV at an electric vehicle charging station equipped with a number of EVSEs is provided. The system includes a cloud controller and an edge controller. The cloud controller is configured to control the EVSEs to perform charging at least one EV. The edge controller is configured to perform the following procedures. Whether a total power consumption corresponding to the EVSEs is equal or larger than X% of a maximum power capacity is determined. X being a real number between 1 and 100. When the total power consumption corresponding to the EVSEs is equal or larger than X% of the maximum power capacity, amount of power for each EVSE is recalculated and the recalculated amount of power is assigned to each EVSE for charging the at least one EV by the EVSEs under control of the edge controller. Charging information of each EVSE is sent to the cloud controller when performing charging the at least one EV by the EVSEs under control of the edge controller. The invention is defined in the appended claims.

### BRIEF DESCRIPTION OF THE DRAWINGS

FIG. 1 illustrates a flowchart for a method for charging electric vehicle (EV) at an electric vehicle charging station equipped with a number of electric vehicle supply equipments (EVSEs) according to an embodiment of the disclosure.
FIG. 2 shows a block diagram of a system for charging EV at an electric vehicle charging station equipped with a number of EVSEs according to an embodiment of the disclosure.
FIG. 3 shows a detailed flowchart of the method for charging EV at an electric vehicle charging station equipped with a number of EVSEs according to an embodiment of the disclosure.
FIG. 4 shows a block diagram of part of the system for charging EV at an electric vehicle charging station provided with three-phase electrical power from grid according to an embodiment of the disclosure.

In the following description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

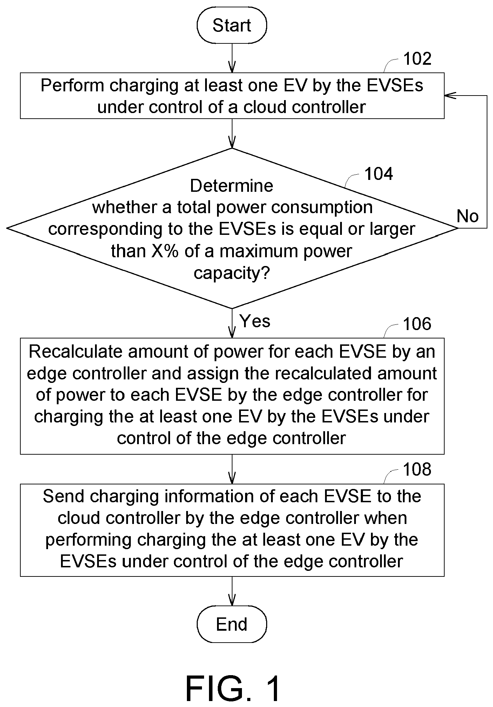

Referring to FIG. 1, a flowchart for a method for charging electric vehicle (EV) at an electric vehicle charging station equipped with a number of electric vehicle supply equipments (EVSEs) according to an embodiment of the disclosure is illustrated. In step 102, charging at least one EV by the EVSEs is performed under control of a cloud controller. In step 104, whether a total power consumption corresponding to the EVSEs is equal or larger than X% of a maximum power capacity is determined. X is a real number between 1 and 100. When the total power consumption corresponding to the EVSEs is equal or larger than X% of the maximum power capacity, step 106 is entered. Otherwise, return to step 102. In step 106, an edge controller recalculates amount of power for each EVSE and assigns the recalculated amount of power to each EVSE for charging the at least one EV by the EVSEs under control of the edge controller. Then, step 108 is entered, and the edge controller sends charging information of each EVSE to the cloud controller when performing charging the at least one EV by the EVSEs under control of the edge controller as a copy to determine the calculation of the power allocated to each EVSE at the next time iteration. This method will be described in more detail as follows.

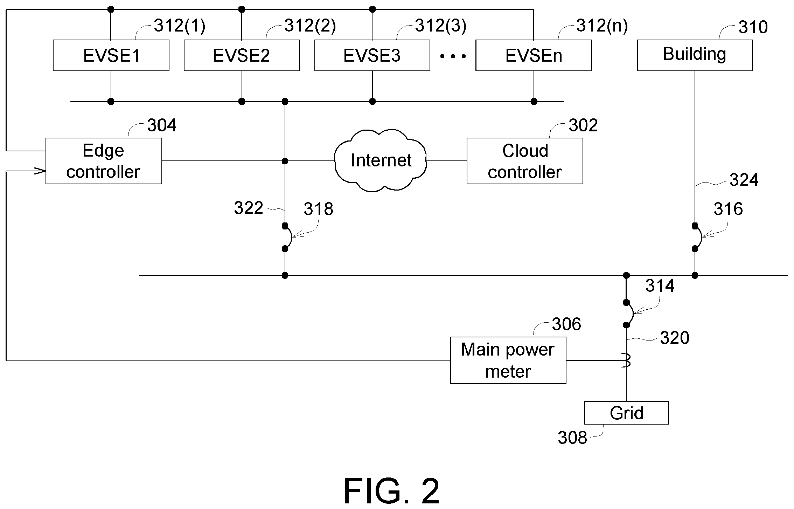

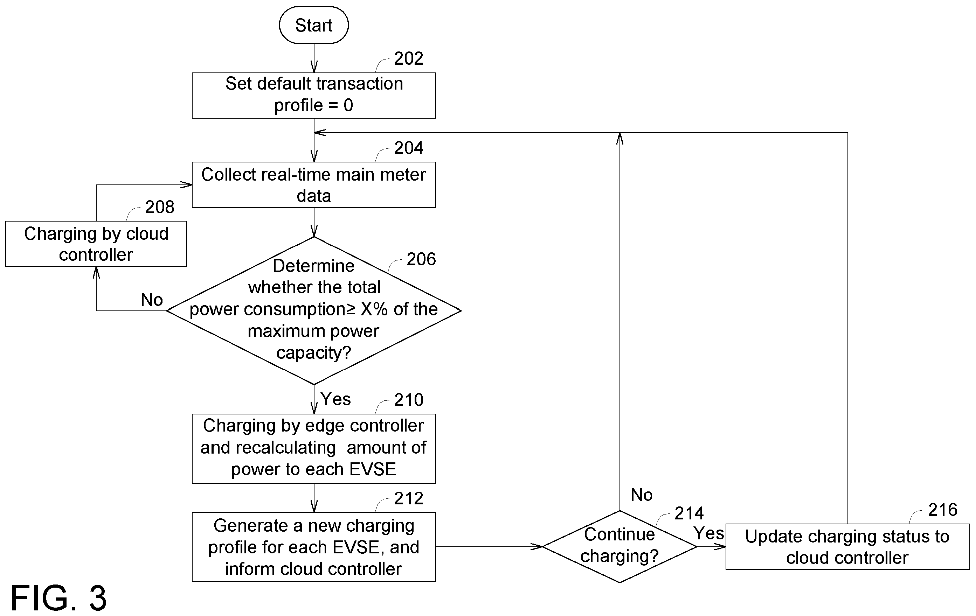

Referring to FIG. 2 and FIG. 3, FIG. 2 shows a block diagram of a system for charging EV at an electric vehicle charging station equipped with a number of EVSEs according to an embodiment of the disclosure, and FIG. 3 shows a detailed flowchart of the method for charging EV at an electric vehicle charging station equipped with a number of EVSEs according to an embodiment of the disclosure. The system of charging EV in an electric vehicle charging station includes, for example, a cloud controller 302 and an edge controller 304, as shown in FIG. 2.

In FIG. 2, an EV charging system environment is illustrated. The grid 308 supplies power to loads such as EVSE1 312(1) to EVSEn 312(n) and the building 310. Additionally, renewable energy sources can contribute power to these loads, potentially even exporting excess energy to the grid 308 when load demand is lower than the renewable energy generated. To cope with high load demand, an energy storage system (ESS) might also be employed to provide supplemental energy to the loads.

The main power meter 306, which can be implemented by a digital power meter, may detect import and export of energy for the entire infrastructure at a time interval. Additionally, each renewable energy source and ESS may be equipped with its own digital power meter. Each EVSE has the capability to monitor its individual energy usage sourced from the grid 308. Each EVSE is also capable of monitoring its own energy exported to the grid 308, if applicable.

The edge controller 304 is capable of collecting data from each EVSE 312 and the main power meter 306, such as import/export values. Utilizing this information, the edge controller 304 can execute a smart charging algorithm to implement dynamic load management (DLM) algorithm when power crunch occurs.

The dynamic load management adjusts the power allocation for each phase (namely, phase L1, phase L2, and phase L3) of every EVSE in real-time, based on the actual electricity demand of the building. The power allocation is performed with ensuring that the current in power allocation does not exceed the current limit for each phase, thus enabling the optimization of energy usage and prevent grid 308 overloaded. The dynamic load management will be elaborated further with the flow chart provided in FIG. 3.

As shown in FIG. 3, in step 202, a default transaction profile of each EVSE is set to zero. The transaction profile of each EVSE indicates the power value or current value for each EVSE, for example, used to charge the corresponding EV by the corresponding EVSE. In step 204, real-time main meter data is collected. That is, the real-time main meter data is obtained from the main power meter 306 at a fixed interval.

The EVSEs 312(1) to 312(n) and a building 310 are provided with power through a power line 320 from the grid 308. The total power consumption corresponding to the EVSEs 312(1) to 312(n) is the difference between the total power consumption along the power line 320 and power consumption for the building 310, or between the X% of the maximum power capacity and power consumption for the building 310. In this situation, the EVSEs 312(1) to 312(n) are provided with power through a power line 322 and the power line 320 and breakers 318 and 314 from the grid 308, and the building 310 is provided with power through a power line 324 and the power line 320 and breakers 316 and 314 from the grid 308, as shown in FIG. 2.

In an embodiment, the total power consumption corresponding to the EVSEs is power consumption for the building which includes power consumption for the EVSEs. In this situation, the EVSEs are located inside the building and the EVSEs and the building are provided with power through the same power line (not shown) from the grid.

In step 206, whether the total power consumption corresponding to the EVSEs is equal or larger than X% of the maximum power capacity is determined. In some embodiment, whether the total power consumption corresponding to the EVSEs is equal or larger than X% of the maximum power capacity can be determined according to the obtained real-time main meter data from the main power meter 306. The main power meter 306 may detect the current flowing through the power line 320, detect the power delivered on the power line 320, or detect the voltage on the power line 320. Since the current flowing through the power line 320 may flow to EVSE1 312(1) to EVSEn 312(n) and building 310 and the power delivered through the power line 320 may be delivered to EVSE1 312(1) to EVSEn 312(n) and building 310, the real-time main meter data is related to the total power consumption corresponding to the EVSEs.

The real-time main meter data may include at least one of real-time energy consumption data, voltage levels and current levels of each phase of the power provided by the grid, and energy usage over time. The maximum power capacity is, for example, a maximum power capacity of a grid infrastructure of the grid 308.

In step 206, when the total power consumption corresponding to the EVSEs is equal or larger than X% of the maximum power capacity, then the method proceeds to step 210. Otherwise, the method proceeds to step 208. In step 208, charging by the cloud controller 302 is performed. That is, charging at least one EV by the EVSEs is performed under control of the cloud controller 302.

When the total power consumption corresponding to the EVSEs is not equal or not larger than X% (for example, 90%) of the maximum power capacity, it means that there is no power crunch and default charging by cloud controller shall commence until there is a power crunch. Therefore, in step 208, the cloud controller 302 may perform the following smart charging procedures with using AI engine, for example. The cloud controller 302 generates a charging prediction data obtained according to a number of historical charging data. Each historical charging data includes an actual charging amount and at least one of a stay time of each EV and a charging time of each EV. The cloud controller 302 obtains a predicted electricity demand and a predicted stay period of each EV through the charging prediction data. The cloud controller 302 can further generate a charging schedule, including providing each EV with a basic charging power amount. The cloud controller 302 can also determine a charging priority of each EV according to the predicted electricity demand and the predicted stay period using the AI engine.

In step 210, charging by the edge controller 304 is performed. When the total power consumption corresponding to the EVSEs is equal or larger than X% (for example, 90%) of the maximum power capacity, it means that there is a power crunch and dynamic load management shall be activated. In the process of the dynamic load management, charging by the cloud controller 302 is changed to charging by the edge controller 304. Therefore, in step 210, charging at least one EV by the EVSEs is performed under control of the edge controller 304. The edge controller 304 performs dynamic load management by recalculating available power to each EVSE, and evenly distribute power to each EVSE by assigning appropriate amount of power to each line for each EVSE for charging each EVSE and update new charging profile to each EVSE.

That is to say, in step 210, the edge controller 304 recalculates amount of power for each EVSE and assigns the recalculated amount of power to each EVSE for charging the at least one EV by the EVSEs under control of the edge controller 304. In some embodiment, each EVSE is assigned with power evenly. For example, each EVSE is assigned with the same power, the same current, or the same ratio (the ratio of individual received power of the EVSE to individual maximum received power of the EVSE). The electricity charged to the battery of EV can be measured in the unit of work, and its unit is, for example, kilowatt hours (kWh) or other work units.

After step 210, step 212 are performed. In step 212, the edge controller 304 updates the charging profile for each EVSE by generating a new charging profile for each EVSE and sending the new charging profile to each EVSE. The new charging profile indicates the assigned and recalculated amount of power, or current, for each EVSE.

Besides, in step 212, the edge controller 304 further sends charging information of each EVSE to the cloud controller 302 when performing charging the at least one EV by the EVSEs 312(1) to 312(n) under control of the edge controller 304. The charging information of each EVSE sent to the cloud controller 302 by the edge controller 304 is used as a new historical charging data used by the cloud controller 302 for generating another charging prediction data for charging the at least one EV by the EVSEs 312(1) to 312(n) under control of the cloud controller 302 in a next time iteration.

The charging information of each EVSE includes, for example, at least one of charging status of each EV, maximum charging current or charging power of each EVSE, charging current or charging power amount of each EV, and time period of stay of each EV.

After step 212, step 214 is performed. In step 214, whether charging is continued using the same charging profile for each EVSE is determined. If yes, then step 216 is entered; if not, then return to step 204. In step 216, the edge controller 304 updates charging status of each EVSE and sends the updated charging status of each EVSE to the cloud controller 302. The charging status of each EVSE indicates whether the corresponding EVSE is still in the status of charging. After step 216, step 204 is entered.

When the determination in step 214 is No, step 204 is performed again, and real-time main meter data is collected again for the next time iteration.

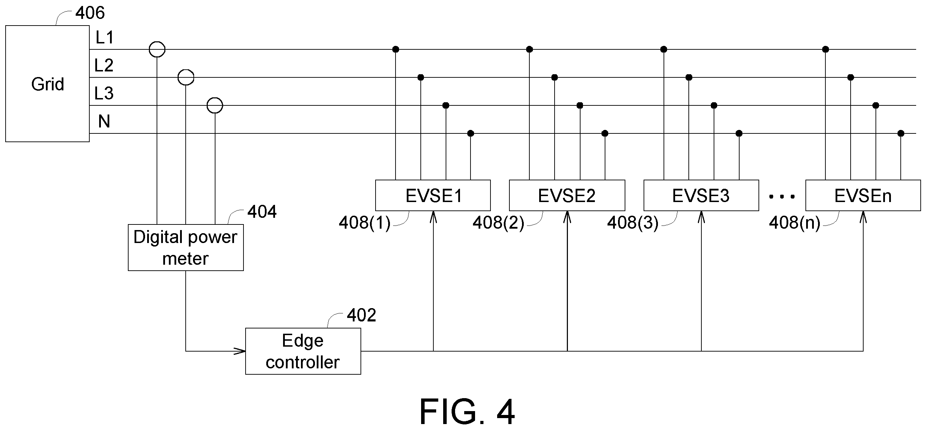

Refer to FIG. 4, which shows a block diagram of part of the system for charging EV at an electric vehicle charging station provided with three-phase electrical power from grid according to an embodiment of the disclosure. FIG. 4 illustrates an example of network of EVSEs connected to the same edge controller 402, represented in TPN (Three Pole Neutral) or 4P (Four Pole) system.

Data from each EVSE may include, but not limited to, charging status of each EVSE, charging current or charging power amount of each EV, and charging priority of each EVSE. Load sharing takes into consideration of each phase (that is, phases L1, L2, and L3). Each EVSE may be connected to each phase separately.

The main power meter may be implemented by a digital power meter 404, which can read grid information at each phase. Edge controller 402 can assign power allocation to each EVSE separately at each phase. Edge controller 402 can read data from the digital power meter 404 and EVSEs 408(1) to 408(n).

Dynamic load management is applied based on, and not limited to, the following: energy consumption data (for example, the energy consumption data of facilities and EVSEs),amount of electrical performance data (for example, voltage, current, and power quality) recalculated by the edge controller 402, EV charging prioritization (for example, VIP account), energy consumption patterns data (that is, historical data), and day-ahead schedule (that is, time-of-use pricing, day-ahead pricing, and real-time pricing).

In detail, grid 406 provides electrical power of phase L1, phase L2, and phase L3. The digital power meter 404 detects the voltage on the line for phase L1, the voltage on the line for phase L2, and the voltage on the line for phase L3. In some embodiment, the digital power meter 404 detects the current flowing through the line for phase L1, the current flowing through the line for phase L2, and the current flowing through the line for phase L3. In some embodiment, the digital power meter 404 detects the power on the line for phase L1, the power on the line for phase L2, and the power on the line for phase L3.

Normally, charging at least one EV by the EVSEs is performed under control of a cloud controller. When the total power consumption corresponding to the EVSEs in a particular phase of power (for example, one of phases L1 to L3) is equal or larger than X% of the maximum power capacity, the edge controller 402 recalculates amount of current or power in the particular phase for each particular EVSE which uses current or the power in the particular phase, and assigns the recalculated amount of power in the particular phase to each particular EVSE for charging the at least one EV by the particular EVSEs. Afterward, when the total power consumption corresponding to the EVSEs in the particular phase of power (for example, one of phases L1 to L3) is changed to be less than X% of the maximum power capacity, the edge controller 402 will inform the cloud controller and then charging at least one EV by the EVSEs is changed to be performed under the control of the cloud controller. By doing so, the power consumption in the particular phase of power which is originally equal or larger than X% of the maximum power capacity can be reduced, and the load balancing among three phases can be achieved.

According to an embodiment, a system for charging EV at an electric vehicle charging station equipped with a number of EVSEs is provided. The system includes a cloud controller and an edge controller. The cloud controller is configured to control the EVSEs to perform charging at least one EV. The edge controller is configured to perform the following procedures. Whether a total power consumption corresponding to the EVSEs is equal or larger than X% of a maximum power capacity is determined. X being a real number between 1 and 100. When the total power consumption corresponding to the EVSEs is equal or larger than X% of the maximum power capacity, amount of power for each EVSE is recalculated and the recalculated amount of power is assigned to each EVSE for charging the at least one EV by the EVSEs under control of the edge controller, which is limited to the X% of maximum power capacity. Charging information of each EVSE is sent to the cloud controller when performing charging the at least one EV by the EVSEs under control of the edge controller.

Although the cloud controller uses prediction engine to predict the behavior of the system load and assign charging profile to each EVSE, the edge controller can track the actual power consumption at local. When any behavior which causes the real time power consumption approaching the power limit occurs, the edge controller will take control and reassign charging profile to each EVSE. In addition, the edge controller provides a shorter latency comparing to the cloud controller because the edge controller is nearer to the EVSEs. Both of the charging by cloud controller and charging by edge controller could use the same or different charging strategies.

Before EV is fully charged and total power consumption is equal or less than X% (for example, 90%), that is, the EV is in charging mode and the total power consumption is less than X%, the charging profile will be taken care by the cloud controller, which may be implemented by a smart charging server. The cloud controller implemented by the smart charging server can consider more parameters as the smart charging server has more powerful computational capability. The edge controller which can be implemented by a normal computer, for example, considers lesser parameters as the edge controller has a limited computational ability.

In the embodiment described above, to minimize or even avoid the cost for infrastructure upgrading, dynamic load management can be introduced by optimizing energy usage and managing load distribution in real-time. Advanced smart charging algorithms are deployed via the edge controller to monitor the energy supply and energy demand, being able to adjust the power allocation optimally in real-time across a number of EVSEs within the available capacity threshold.

According to the embodiment described herein, the method and system for charging EVs at an electric vehicle charging station equipped with multiple EVSEs can execute dynamic load management when power crunch occurs. In such instances, power is re-allocated in some phase to ensure balanced loads across each phase. The method and system for charging EVs at an electric vehicle charging station can prevent strain on the grid infrastructure caused by EV charging, thereby minimizing or eliminating the cost associated with infrastructure upgrades.

It will be apparent to those skilled in the art that various modifications and variations can be made to the disclosed embodiments. It is intended that the specification and examples be considered as exemplars only, with a true scope of the disclosure being indicated by the following claims.

## Claims

1. A method for charging electric vehicle (EV) at an electric vehicle charging station equipped with a plurality of electric vehicle supply equipments (EVSEs) (312(1) to 312(n), 408(1) to 408(n)), the method comprising:
performing charging at least one EV by the EVSEs (312(1) to 312(n), 408(1) to 408(n)) under control of a cloud controller (302);
determining whether a total power consumption corresponding to the EVSEs (312(1) to 312(n), 408(1) to 408(n)) is equal or larger than X% of a maximum power capacity, X being a real number between 1 and 100;
wherein the maximum power capacity is a maximum power capacity of a grid infrastructure of a grid (308,406) that is configured to supply power to the EVSEs; the method **characterized in that**: when the total power consumption corresponding to the EVSEs (312(1) to 312(n), 408(1) to 408(n)) is
equal or larger than X% of the maximum power capacity, recalculating amount of power for each EVSE (312(1) to 312(n), 408(1) to 408(n)) by an edge controller (304, 402) and assigning the recalculated amount of power to each EVSE (312(1) to 312(n), 408(1) to 408(n)) by the edge controller (304, 402) for charging the at least one EV by the EVSEs (312(1) to 312(n), 408(1) to 408(n)) under control of the edge controller (304, 402); and
sending charging information of each EVSE (312(1) to 312(n), 408(1) to 408(n)) to the cloud controller (302) by the edge controller (304, 402) when performing charging the at least one EV by the EVSEs (312(1) to 312(n), 408(1) to 408(n)) under control of the edge controller (304, 402);
wherein when the total power consumption corresponding to the EVSEs (312(1) to 312(n), 408(1) to 408(n)) is not equal or not larger than X% of the maximum power capacity, it means that there is no power crunch and default charging by cloud controller (302) commences until there is a power crunch; wherein when the total power consumption corresponding to the EVSEs (312(1) to 312(n), 408(1) to 408(n)) is equal or larger than X% of the maximum power capacity, it means that there is a power crunch and dynamic load management is activated;
wherein in the process of the dynamic load management, charging by the cloud controller (302) is changed to charging by the edge controller (304, 402), and charging at least one EV by the EVSEs (312(1) to 312(n), 408(1) to 408(n)) is performed under control of the edge controller (304, 402);
wherein the edge controller (304, 402) is configured to read data from a main power meter (306, 404) and the EVSEs (312(1) to 312(n), 408(1) to 408(n)), the main power meter (306, 404) is capable of reading grid information of the grid (308, 406), the cloud controller (302) is implemented by a server and the edge controller (304, 402) is implemented by a computer, the cloud controller (302) has more computational capability than the edge controller (304, 402).

2. The method according to claim 1, wherein the EVSEs (312(1) to 312(n), 408(1) to 408(n)) and a building (310) are provided with power through a power line (320) from the grid (308, 406), the total power consumption corresponding to the EVSEs (312(1) to 312(n), 408(1) to 408(n)) is a sum of power consumption for the building (310) and power consumption for the EVSEs (312(1) to 312(n), 408(1) to 408(n)) or the total power consumption corresponding to the EVSEs (312(1) to 312(n), 408(1) to 408(n)) is power consumption for the building (310) including power consumption for the EVSEs (312(1) to 312(n), 408(1) to 408(n)).

3. The method according to claim 1, further comprising:
obtaining a real-time main meter data from [[a]] the main power meter (306) when the at least one EV are charged through the EVSEs (312(1) to 312(n), 408(1) to 408(n));
wherein whether the total power consumption corresponding to the EVSEs (312(1) to 312(n), 408(1) to 408(n)) is equal or larger than X% of the maximum power capacity is determined according to the obtained real-time main meter data from the main power meter (306);
wherein the real-time main meter data is related to the total power consumption corresponding to the EVSEs (312(1) to 312(n), 408(1) to 408(n)), the real-time main meter data comprises at least one of real-time energy consumption data, voltage levels and current levels of each phase of the power provided by the grid (308, 406), and energy usage over time, the main power meter (306) is implemented by a digital power meter (404), and the main power meter (306) detects import and export of energy for the grid infrastructure at a time interval.

4. The method according to claim 1, wherein in the step of recalculating amount of power for each EVSE (312(1) to 312(n), 408(1) to 408(n)) by an edge controller (304, 402) and assigning the recalculated amount of power to each EVSE (312(1) to 312(n), 408(1) to 408(n)) by the edge controller (304, 402) for charging the at least one EV by the EVSEs (312(1) to 312(n), 408(1) to 408(n)) under control of the edge controller (304, 402), each EVSE (312(1) to 312(n), 408(1) to 408(n)) is assigned with power evenly.

5. The method according to claim 1, wherein in the step of performing charging at least one EV by the EVSEs (312(1) to 312(n), 408(1) to 408(n)) under control of a cloud controller (302), the cloud controller (302) performs the following steps:
generating a charging prediction data obtained according to a plurality of historical charging data, wherein each historical charging data comprises an actual charging amount and at least one of a stay time of each EV and a charging time of each EV;
obtaining a predicted electricity demand and a predicted stay period of each EV through the charging prediction data;
generating a charging schedule, comprising providing each EV with a charging power amount; and
determining a charging priority of each EV according to the predicted electricity demand and the predicted stay period;
wherein in the step of sending charging information of each EVSE (312(1) to 312(n), 408(1) to 408(n)) to the cloud controller (302) by the edge controller (304, 402) when performing charging the at least one EV by the EVSEs (312(1) to 312(n), 408(1) to 408(n)) under control of the edge controller (304, 402), the charging information of each EVSE (312(1) to 312(n), 408(1) to 408(n)) sent to the cloud controller (302) by the edge controller (304, 402) is used as a new historical charging data used by the cloud controller (302) for generating another charging prediction data for charging the at least one EV by the EVSEs (312(1) to 312(n), 408(1) to 408(n)) under control of the cloud controller (302) in a next time iteration.

6. The method according to claim 1, further comprising:
updating a charging profile for each EVSE (312(1) to 312(n), 408(1) to 408(n)) by generating a new charging profile for each EVSE (312(1) to 312(n), 408(1) to 408(n)) and sending the new charging profile to each EVSE (312(1) to 312(n), 408(1) to 408(n)) by the edge controller (304, 402);
wherein the new charging profile indicates the assigned and recalculated amount of power, or current, for each EVSE (312(1) to 312(n), 408(1) to 408(n));
wherein the charging information of each EVSE (312(1) to 312(n), 408(1) to 408(n)) comprises at least one of charging status of each EV, charging power amount of each EV, and time period of stay of each EV.

7. The method according to claim 1, wherein when the total power consumption corresponding to the EVSEs (312(1) to 312(n), 408(1) to 408(n)) in a particular phase of power is equal or larger than X% of the maximum power capacity, the edge controller (304, 402) recalculates amount of current or power in the particular phase for each particular EVSE (312(1) to 312(n), 408(1) to 408(n)) which uses current or the power in the particular phase, and assigns the recalculated amount of power in the particular phase to each particular EVSE (312(1) to 312(n), 408(1) to 408(n)) for charging the at least one EV by the particular EVSEs (312(1) to 312(n), 408(1) to 408(n)).

8. A system for charging EV at an electric vehicle charging station equipped with a plurality of EVSEs (312(1) to 312(n), 408(1) to 408(n)), the system comprising:
a cloud controller (302), configured to control the EVSEs (312(1) to 312(n), 408(1) to 408(n)) to perform charging at least one EV; and
an edge controller (304, 402), configured to perform the following procedures:
determining whether a total power consumption corresponding to the EVSEs (312(1) to 312(n), 408(1) to 408(n)) is equal or larger than X% of a maximum power capacity, X being a real number between 1 and 100;
wherein the maximum power capacity is a maximum power capacity of a grid infrastructure of a grid (308,406) that is configured to supply power to the EVSEs; the system **characterized in that** the edge controller (304,402) is further configured to perform the following procedures:: when the total power consumption corresponding to the EVSEs (312(1) to 312(n), 408(1) to 408(n)) is equal or larger than X% of the maximum power capacity, recalculating amount of power for each EVSE (312(1) to 312(n), 408(1) to 408(n)) and assigning the recalculated amount of power to each EVSE (312(1) to 312(n), 408(1) to 408(n)) for charging the at least one EV by the EVSEs (312(1) to 312(n), 408(1) to 408(n)) under control of the edge controller (304, 402); and
sending charging information of each EVSE (312(1) to 312(n), 408(1) to 408(n)) to the cloud controller (302) when performing charging the at least one EV by the EVSEs (312(1) to 312(n), 408(1) to 408(n)) under control of the edge controller (304, 402);
wherein when the total power consumption corresponding to the EVSEs (312(1) to 312(n), 408(1) to 408(n)) is not equal or not larger than X% of the maximum power capacity, it means that there is no power crunch and default charging by cloud controller (302) commences until there is a power crunch;
wherein when the total power consumption corresponding to the EVSEs (312(1) to 312(n), 408(1) to 408(n)) is equal or larger than X% of the maximum power capacity, it means that there is a power crunch and dynamic load management is activated;
wherein in the process of the dynamic load management, charging by the cloud controller (302) is changed to charging by the edge controller (304, 402), and charging at least one EV by the EVSEs (312(1) to 312(n), 408(1) to 408(n)) is performed under control of the edge controller (304, 402);
**wherein** the edge controller (304, 402) is configured to read data from a main power meter (306, 404) and the EVSEs (312(1) to 312(n), 408(1) to 408(n)), the main power meter (306, 404) is capable of reading grid information of the grid (308, 406), the cloud controller (302) is implemented by a server and the edge controller (304, 402) is implemented by a computer, the cloud controller (302) has more computational capability than the edge controller (304, 402).

9. The system according to claim 8, wherein the EVSEs (312(1) to 312(n), 408(1) to 408(n)) and a building (310) are provided with power through a power line (320) from the grid (308, 406), the total power consumption corresponding to the EVSEs (312(1) to 312(n), 408(1) to 408(n)) is a sum of power consumption for the building (310) and power consumption for the EVSEs (312(1) to 312(n), 408(1) to 408(n)) or the total power consumption corresponding to the EVSEs (312(1) to 312(n), 408(1) to 408(n)) is power consumption for the building (310) including power consumption for the EVSEs (312(1) to 312(n), 408(1) to 408(n)).

10. The system according to claim 8, the edge controller (304, 402) is further configured to obtain a real-time main meter data from [[a]] the main power meter (306) when the at least one EV are charged through the EVSEs (312(1) to 312(n), 408(1) to 408(n));
wherein whether the total power consumption corresponding to the EVSEs (312(1) to 312(n), 408(1) to 408(n)) is equal or larger than X% of the maximum power capacity is determined according to the obtained real-time main meter data from the main power meter (306);
wherein the real-time main meter data is related to the total power consumption corresponding to the EVSEs (312(1) to 312(n), 408(1) to 408(n)), the real-time main meter data comprises at least one of real-time energy consumption data, voltage levels and current levels of each phase of the power provided by the grid (308, 406), and energy usage over time, the main power meter (306) is implemented by a digital power meter (404), and the main power meter (306) detects import and export of energy for the grid infrastructure at a time interval.

11. The system according to claim 8, wherein in the procedure of recalculating amount of power for each EVSE (312(1) to 312(n), 408(1) to 408(n)) and assigning the recalculated amount of power to each EVSE (312(1) to 312(n), 408(1) to 408(n)) for charging the at least one EV by the EVSEs (312(1) to 312(n), 408(1) to 408(n)) under control of the edge controller (304, 402), each EVSE (312(1) to 312(n), 408(1) to 408(n)) is assigned with power evenly.

12. The system according to claim 8, wherein the cloud controller (302) is further configured to perform the following procedures:
generating a charging prediction data obtained according to a plurality of historical charging data, wherein each historical charging data comprises an actual charging amount and at least one of a stay time of each EV and a charging time of each EV;
obtaining a predicted electricity demand and a predicted stay period of each EV through the charging prediction data;
generating a charging schedule, comprising providing each EV with a charging power amount; and
determining a charging priority of each EV according to the predicted electricity demand and the predicted stay period.

13. The system according to claim 12, wherein in the procedure of sending charging information of each EVSE (312(1) to 312(n), 408(1) to 408(n)) to the cloud controller (302) when performing charging the at least one EV by the EVSEs (312(1) to 312(n), 408(1) to 408(n)) under control of the edge controller (304, 402), the charging information of each EVSE (312(1) to 312(n), 408(1) to 408(n)) sent to the cloud controller (302) is used as a new historical charging data used by the cloud controller (302) for generating another charging prediction data for charging the at least one EV by the EVSEs (312(1) to 312(n), 408(1) to 408(n)) under control of the cloud controller (302) in a next time iteration.

14. The system according to claim 8, wherein the edge controller (304, 402) is further configured to perform the following procedures:
updating a charging profile for each EVSE (312(1) to 312(n), 408(1) to 408(n)) by generating a new charging profile for each EVSE (312(1) to 312(n), 408(1) to 408(n)) and sending the new charging profile to each EVSE (312(1) to 312(n), 408(1) to 408(n));
wherein the new charging profile indicates the assigned and recalculated amount of power, or current, for each EVSE (312(1) to 312(n), 408(1) to 408(n));
wherein the charging information of each EVSE (312(1) to 312(n), 408(1) to 408(n)) comprises at least one of charging status of each EV, charging power amount of each EV, and time period of stay of each EV.

15. The system according to claim 8, wherein the edge controller (304, 402) is further configured to perform the following procedures:
when the total power consumption corresponding to the EVSEs (312(1) to 312(n), 408(1) to 408(n)) in a particular phase of power is equal or larger than X% of the maximum power capacity, recalculating amount of current or power in the particular phase for each particular EVSE (312(1) to 312(n), 408(1) to 408(n)) which uses current or the power in the particular phase, and assigning the recalculated amount of power in the particular phase to each particular EVSE (312(1) to 312(n), 408(1) to 408(n)) for charging the at least one EV by the particular EVSEs (312(1) to 312(n), 408(1) to 408(n)).

## Patentansprüche

1. Verfahren zum Laden eines Elektrofahrzeugs (EV) an einer Elektrofahrzeug-Ladestation, die mit einer Vielzahl von Elektrofahrzeug-Ladeeinrichtungen (EVSEs) (312(1) bis 312(n), 408(1) bis 408(n)) ausgestattet ist, wobei das Verfahren umfasst:
Laden mindestens eines EV durch die EVSE (312(1) bis 312(n), 408(1) bis 408(n)) unter der Steuerung einer Cloud-Steuerung (302);
Bestimmen, ob ein den EVSEs (312(1) bis 312(n), 408(1) bis 408(n)) entsprechende Gesamtleistungsaufnahme gleich oder größer als X % einer maximalen Leistungskapazität ist, wobei X eine reelle Zahl zwischen 1 und 100 ist;
wobei die maximale Leistungskapazität die maximale Leistungskapazität einer Netzinfrastruktur eines Netzes (308,406) ist, das zur Versorgung der EVSEs mit Leistung ausgebildet ist, wobei das Verfahren **dadurch gekennzeichnet ist, dass**:
wenn die den EVSEs (312(1) bis 312(n), 408(1) bis 408(n)) entsprechende Gesamtleistungsaufnahme gleich oder größer als X % der maximalen Leistungskapazität ist, Neuberechnen der Leistungsmenge für jede EVSE (312(1) bis 312(n), 408(1) bis 408(n)) durch eine Edge-Steuerung (304, 402) und
Zuordnen der neu berechneten Leistungsmenge an jede EVSE (312(1) bis 312(n), 408(1) bis 408(n)) durch die Edge-Steuerung (304, 402) zum Laden des mindestens einen EV durch die EVSEs (312(1) bis 312(n), 408(1) bis 408(n)) unter der Steuerung der Edge-Steuerung (304, 402); und
Senden von Ladeinformationen jeder EVSE (312(1) bis 312(n), 408(1) bis 408(n)) an die Cloud-Steuerung (302) durch die Edge-Steuerung (304, 402) bei der Durchführung des Ladevorgangs des mindestens einen EV durch die EVSEs (312(1) bis 312(n), 408(1) bis 408(n)) unter der Steuerung der Edge-Steuerung (304, 402);
wobei, wenn die den EVSEs (312(1) bis 312(n), 408(1) bis 408(n)) entsprechende Gesamtleistungsaufnahme nicht gleich oder nicht größer als X % der maximalen Leistungskapazität ist, bedeutet dies, dass kein Leistungsengpass vorliegt und die Standardladung durch die Cloud-Steuerung (302) beginnt, bis ein Leistungsengpass auftritt;
wobei, wenn die den EVSEs (312(1) bis 312(n), 408(1) bis 408(n)) entsprechende Gesamtleistungsaufnahme gleich oder größer als X % der maximalen Leistungskapazität ist, bedeutet dies, dass ein Leistungsengpass vorliegt, und das dynamische Lastmanagement wird aktiviert;
wobei im Rahmen des dynamischen Lastmanagements das Laden durch die Cloud-Steuerung (302) auf das Laden durch die Edge-Steuerung (304, 402) umgestellt wird und das Laden mindestens eines EV durch die EVSEs (312(1) bis 312(n), 408(1) bis 408(n)) unter der Steuerung der Edge-Steuerung (304, 402) durchgeführt wird;
wobei die Edge-Steuerung (304, 402) so ausgebildet ist, dass sie Daten von einem Hauptleistungsmesser (306, 404) und den EVSEs (312(1) bis 312(n), 408(1) bis 408(n)) ausliest, der Hauptleistungsmesser (306, 404) in der Lage ist, Netzinformationen des Netzes (308, 406) auszulesen, die Cloud-Steuerung (302) durch einen Server und die Edge-Steuerung (304, 402) durch einen Computer implementiert ist, wobei die Cloud-Steuerung (302) über eine höhere Rechenleistung verfügt als die Edge-Steuerung (304, 402).

2. Verfahren nach Anspruch 1, wobei die EVSEs (312(1) bis 312(n), 408(1) bis 408(n)) und ein Gebäude (310) über eine Stromleitung (320) aus dem Netz (308, 406) mit Leistung versorgt werden, wobei die den EVSEs (312(1) bis 312(n), 408(1) bis 408(n)) entsprechende Gesamtleistungsaufnahme eine Summe aus der Leistungsaufnahme für das Gebäude (310) und der Leistungsaufnahme für die EVSEs (312(1) bis 312(n), 408(1) bis 408(n)) oder die den EVSEs (312(1) bis 312(n), 408(1) bis 408(n)) entsprechende Gesamtleistungsaufnahme die Leistungsaufnahme für das Gebäude (310) ist, einschließlich der Leistungsaufnahme für die EVSEs (312(1) bis 312(n), 408(1) bis 408(n)).

3. Verfahren nach Anspruch 1, das ferner umfasst:
Erhalten von Echtzeit-Hauptzählerdaten von [[a]] dem Hauptleistungsmesser (306), wenn das mindestens eine EV über die EVSEs (312(1) bis 312(n), 408(1) bis 408(n)) geladen wird;
wobei anhand der vom Hauptleistungsmesser (306) erhaltenen Echtzeitdaten ermittelt wird, ob die den EVSEs (312(1) bis 312(n), 408(1) bis 408(n)) entsprechende Gesamtleistungsaufnahme gleich oder größer als X % der maximalen Leistungskapazität ist;
wobei sich die Echtzeit-Hauptzählerdaten auf die den EVSEs (312(1) bis 312(n), 408(1) bis 408(n)) entsprechende Gesamtleistungsaufnahme beziehen, die Echtzeit-Hauptzählerdaten Echtzeit-Energieverbrauchsdaten, Spannungspegel und/oder Strompegel jeder Phase der vom Netz (308, 406) gelieferten Leistung sowie den Energieverbrauch im Zeitverlauf umfassen, der Hauptleistungsmesser (306) durch einen digitalen Leistungsmesser (404) implementiert ist und der Hauptleistungsmesser (306) in einem Zeitintervall die Energieeinspeisung und Energieausspeisung für die Netzinfrastruktur erfasst.

4. Verfahren nach Anspruch 1, wobei bei dem Schritt des Neuberechnens der Leistungsmenge für jede EVSE (312(1) bis 312(n), 408(1) bis 408(n)) durch eine Edge-Steuerung (304, 402) und Zuordnens der neu berechneten Leistungsmenge an jede EVSE (312(1) bis 312(n), 408(1) bis 408(n)) durch die Edge-Steuerung (304, 402) zum Laden des mindestens einen EV durch die EVSEs (312(1) bis 312(n), 408(1) bis 408(n)) unter der Steuerung der Edge-Steuerung (304, 402) jede EVSE (312(1) bis 312(n), 408(1) bis 408(n)) gleichmäßig mit Leistung versorgt wird.

5. Verfahren nach Anspruch 1, wobei bei dem Schritt des Durchführens des Ladens von mindestens einem EV durch die EVSE (312(1) bis 312(n), 408(1) bis 408(n)) unter der Steuerung einer Cloud-Steuerung (302) die Cloud-Steuerung (302) die folgenden Schritte durchführt:
Erzeugen von Ladevorhersagedaten, die auf der Grundlage einer Vielzahl historischer Ladedaten erhalten werden, wobei alle historischen Ladedaten eine tatsächliche Lademenge und eine Verweildauer jedes EV und/oder eine Ladezeit jedes EV umfassen;
Erhalten eines prognostizierten Strombedarfs und einer prognostizierten Verweildauer jedes EV anhand der Ladevorhersagedaten;
Erstellen eines Ladeplans, der das Bereitstellen einer Ladeleistungsmenge an jedes EV umfasst; und
Bestimmen einer Ladepriorität für jedes EV auf der Grundlage des prognostizierten Strombedarfs und der prognostizierten Verweildauer;
wobei bei dem Schritt des Sendens von Ladeinformationen jeder EVSE (312(1) bis 312(n), 408(1) bis 408(n)) an die Cloud-Steuerung (302) durch die Edge-Steuerung (304, 402) beim Durchführen des Ladens des mindestens einen EV durch die EVSEs (312(1) bis 312(n), 408(1) bis 408(n)) unter der Steuerung der Edge-Steuerung (304, 402) die Ladeinformationen jeder EVSE (312(1) bis 312(n), 408(1) bis 408(n)), die von der Edge-Steuerung (304, 402) an die Cloud-Steuerung (302) gesendet werden, als neue historische Ladedaten verwendet, die von der Cloud-Steuerung (302) zur Erzeugung weiterer Ladevorhersagedaten für das Laden des mindestens einen EV durch die EVSEs (312(1) bis 312(n), 408(1) bis 408(n)) unter der Steuerung der Cloud-Steuerung (302) in einer nächsten Zeititeration verwendet werden.

6. Verfahren nach Anspruch 1, das ferner umfasst:
Aktualisieren eines Ladeprofils für jede EVSE (312(1) bis 312(n), 408(1) bis 408(n)) durch Erzeugen eines neuen Ladeprofils für jede EVSE (312(1) bis 312(n), 408(1) bis 408(n)), und Senden des neuen Ladeprofils an jede EVSE (312(1) bis 312(n), 408(1) bis 408(n)) durch die Edge-Steuerung (304, 402); wobei das neue Ladeprofil die zugewiesene und neu berechnete Leistungsmenge oder Strommenge für jede EVSE (312(1) bis 312(n), 408(1) bis 408(n)) angibt;
wobei die Ladeinformationen jeder EVSE (312(1) bis 312(n), 408(1) bis 408(n)) den Ladestatus jedes EV, die Ladeleistungsmenge jedes EV und/oder die Verweildauer jedes EV umfassen.

7. Verfahren nach Anspruch 1, wobei, wenn die den EVSEs (312(1) bis 312(n), 408(1) bis 408(n)) entsprechende Gesamtleistungsaufnahme in einer bestimmten Leistungsphase gleich oder größer als X % der maximalen Leistungskapazität ist, die Edge-Steuerung (304, 402) die Strom- oder Leistungsmenge in der bestimmten Phase für jede bestimmte EVSE (312(1) bis 312(n), 408(1) bis 408(n)) neuberechnet, die den Strom oder die Leistung in der bestimmten Phase verwendet, und jeder bestimmten EVSE (312(1) bis 312(n), 408(1) bis 408(n)) zum Laden des mindestens einen EV durch die bestimmten EVSE (312(1) bis 312(n), 408(1) bis 408(n)) die neu berechnete Leistungsmenge in der bestimmten Phase zuweist.

8. System zum Laden eines EV an einer Elektrofahrzeug-Ladestation, die mit einer Vielzahl von EVSEs (312(1) bis 312(n), 408(1) bis 408(n)) ausgestattet sind, wobei das System aufweist:
eine Cloud-Steuerung (302), die so ausgebildet ist, dass sie die EVSEs (312(1) bis 312(n), 408(1) bis 408(n)) so steuert, dass sie das Laden mindestens eines EV durchführen; und
eine Edge-Steuerung (304, 402), die so ausgebildet ist, dass sie die folgenden Vorgänge ausführt:
Bestimmen, ob ein den EVSEs (312(1) bis 312(n), 408(1) bis 408(n)) entsprechende Gesamtleistungsaufnahme gleich oder größer als X % einer maximalen Leistungskapazität ist, wobei X eine reelle Zahl zwischen 1 und 100 ist;
wobei die maximale Leistungskapazität eine maximale Leistungskapazität einer Netzinfrastruktur eines Netzes (308, 406) ist, das zur Versorgung der EVSEs mit Leistung ausgebildet ist, wobei das System **dadurch gekennzeichnet ist, dass** die Edge-Steuerung (304,402) ferner dazu ausgebildet ist, die folgenden Vorgänge durchzuführen:
wenn die den EVSEs (312(1) bis 312(n), 408(1) bis 408(n)) entsprechende Gesamtleistungsaufnahme gleich oder größer als X % der maximalen Leistungskapazität ist, Neuberechnen der Leistungsmenge für jede EVSE (312(1) bis 312(n), 408(1) bis 408(n)) und Zuordnen der neu berechneten Leistungsmenge an jede EVSE (312(1) bis 312(n), 408(1) bis 408(n)) zum Laden des mindestens einen EV durch die EVSEs (312(1) bis 312(n), 408(1) bis 408(n)) unter der Steuerung der Edge-Steuerung (304, 402); und
Senden von Ladeinformationen jeder EVSE (312(1) bis 312(n), 408(1) bis 408(n)) an die Cloud-Steuerung (302) bei der Durchführung des Ladens des mindestens einen EV durch die EVSEs (312(1) bis 312(n), 408(1) bis 408(n)) unter der Steuerung der Edge-Steuerung (304, 402);
wobei, wenn die den EVSEs (312(1) bis 312(n), 408(1) bis 408(n)) entsprechende Gesamtleistungsaufnahme nicht gleich oder nicht größer als X % der maximalen Leistungskapazität ist, bedeutet dies, dass kein Leistungsengpass vorliegt und die Standardladung durch die Cloud-Steuerung (302) beginnt, bis ein Leistungsengpass auftritt;
wobei, wenn die den EVSEs (312(1) bis 312(n), 408(1) bis 408(n)) entsprechende Gesamtleistungsaufnahme gleich oder größer als X % der maximalen Leistungskapazität ist, bedeutet dies, dass ein Leistungsengpass vorliegt, und das dynamische Lastmanagement wird aktiviert;
wobei im Rahmen des dynamischen Lastmanagements das Laden durch die Cloud-Steuerung (302) auf das Laden durch die Edge-Steuerung (304, 402) umgestellt wird und das Laden mindestens eines EV durch die EVSEs (312(1) bis 312(n), 408(1) bis 408(n)) unter der Steuerung der Edge-Steuerung (304, 402) durchgeführt wird;
wobei die Edge-Steuerung (304, 402) so ausgebildet ist, dass sie Daten von einem Hauptleistungsmesser (306, 404) und den EVSEs (312(1) bis 312(n), 408(1) bis 408(n)) ausliest, der Hauptleistungsmesser (306, 404) in der Lage ist, Netzinformationen des Netzes (308, 406) auszulesen, die Cloud-Steuerung (302) durch einen Server und die Edge-Steuerung (304, 402) durch einen Computer implementiert ist, wobei die Cloud-Steuerung (302) über eine höhere Rechenleistung verfügt als die Edge-Steuerung (304, 402).

9. System nach Anspruch 8, wobei die EVSEs (312(1) bis 312(n), 408(1) bis 408(n)) und ein Gebäude (310) über eine Stromleitung (320) aus dem Netz (308, 406) mit Leistung versorgt werden, wobei die den EVSEs (312(1) bis 312(n), 408(1) bis 408(n)) entsprechende Gesamtleistungsaufnahme eine Summe aus der Leistungsaufnahme für das Gebäude (310) und der Leistungsaufnahme für die EVSEs (312(1) bis 312(n), 408(1) bis 408(n)) oder die den EVSEs (312(1) bis 312(n), 408(1) bis 408(n)) entsprechende Gesamtleistungsaufnahme die Leistungsaufnahme für das Gebäude (310) ist, einschließlich der Leistungsaufnahme für die EVSEs (312(1) bis 312(n), 408(1) bis 408(n)).

10. System nach Anspruch 8, wobei die Edge-Steuerung (304, 402) ferner so ausgebildet ist, dass sie Echtzeit-Hauptzählerdaten von [[a]] dem Hauptleistungsmesser (306) erhält, wenn das mindestens eine EV über die EVSE (312(1) bis 312(n), 408(1) bis 408(n)) geladen wird;
wobei anhand der vom Hauptleistungsmesser (306) erhaltenen Echtzeitdaten ermittelt wird, ob die den EVSEs (312(1) bis 312(n), 408(1) bis 408(n)) entsprechende Gesamtleistungsaufnahme gleich oder größer als X % der maximalen Leistungskapazität ist;
wobei sich die Echtzeit-Hauptzählerdaten auf die den EVSEs (312(1) bis 312(n), 408(1) bis 408(n)) entsprechende Gesamtleistungsaufnahme beziehen, die Echtzeit-Hauptzählerdaten Echtzeit-Energieverbrauchsdaten, Spannungspegel und/oder Strompegel jeder Phase der vom Netz (308, 406) gelieferten Leistung sowie den Energieverbrauch im Zeitverlauf umfassen, der Hauptleistungsmesser (306) durch einen digitalen Leistungsmesser (404) implementiert ist und der Hauptleistungsmesser (306) in einem Zeitintervall die Energieeinspeisung und Energieausspeisung für die Netzinfrastruktur erfasst.

11. System nach Anspruch 8, wobei bei dem Vorgang des Neuberechnens der Leistungsmenge für jede EVSE (312(1) bis 312(n), 408(1) bis 408(n)) und Zuordnens der neu berechneten Leistungsmenge an jede EVSE (312(1) bis 312(n), 408(1) bis 408(n)) zum Laden des mindestens einen EV durch die EVSEs (312(1) bis 312(n), 408(1) bis 408(n)) unter der Steuerung der Edge-Steuerung (304, 402) jede EVSE (312(1) bis 312(n), 408(1) bis 408(n)) gleichmäßig mit Leistung versorgt wird.

12. System nach Anspruch 8, wobei die Cloud-Steuerung (302) ferner dazu ausgebildet ist, die folgenden Vorgänge durchzuführen:
Erzeugen von Ladevorhersagedaten, die auf der Grundlage einer Vielzahl historischer Ladedaten erhalten werden, wobei alle historischen Ladedaten eine tatsächliche Lademenge und eine Verweildauer jedes EV und/oder eine Ladezeit jedes EV umfassen;
Erhalten eines prognostizierten Strombedarfs und einer prognostizierten Verweildauer jedes EV anhand der Ladevorhersagedaten;
Erstellen eines Ladeplans, der das Bereitstellen einer Ladeleistungsmenge an jedes EV umfasst; und
Bestimmen einer Ladepriorität für jedes EV auf der Grundlage des prognostizierten Strombedarfs und der prognostizierten Verweildauer.

13. System nach Anspruch 12, wobei bei dem Vorgang des Sendens von Ladeinformationen jeder EVSE (312(1) bis 312(n), 408(1) bis 408(n)) an die Cloud-Steuerung (302) beim Durchführen des Ladens des mindestens einen EV durch die EVSEs (312(1) bis 312(n), 408(1) bis 408(n)) unter der Steuerung der Edge-Steuerung (304, 402) die Ladeinformationen jeder EVSE (312(1) bis 312(n), 408(1) bis 408(n)), die an die Cloud-Steuerung (302) gesendet werden, als neue historische Ladedaten verwendet, die von der Cloud-Steuerung (302) zur Erzeugung weiterer Ladevorhersagedaten für das Laden des mindestens einen EV durch die EVSEs (312(1) bis 312(n), 408(1) bis 408(n)) unter der Steuerung der Cloud-Steuerung (302) in einer nächsten Zeititeration verwendet werden.

14. System nach Anspruch 8, wobei die Edge-Steuerung (304, 402) ferner dazu ausgebildet ist, die folgenden Vorgänge durchzuführen:
Aktualisieren eines Ladeprofils für jede EVSE (312(1) bis 312(n), 408(1) bis 408(n)) durch Erzeugen eines neuen Ladeprofils für jede EVSE (312(1) bis 312(n), 408(1) bis 408(n)), und Senden des neuen Ladeprofils an jede EVSE (312(1) bis 312(n), 408(1) bis 408(n));
wobei das neue Ladeprofil die zugewiesene und neu berechnete Leistungsmenge oder Strommenge für jede EVSE (312(1) bis 312(n), 408(1) bis 408(n)) angibt;
wobei die Ladeinformationen jeder EVSE (312(1) bis 312(n), 408(1) bis 408(n)) den Ladestatus jedes EV, die Ladeleistungsmenge jedes EV und/oder die Verweildauer jedes EV umfassen.

15. System nach Anspruch 8, wobei die Edge-Steuerung (304, 402) ferner dazu ausgebildet ist, die folgenden Vorgänge durchzuführen:
wenn die den EVSEs (312(1) bis 312(n), 408(1) bis 408(n)) entsprechende Gesamtleistungsaufnahme in einer bestimmten Leistungsphase gleich oder größer als X % der maximalen Leistungskapazität ist, Neuberechnen der Strom- oder Leistungsmenge in der bestimmten Phase für jede bestimmte EVSE (312(1) bis 312(n), 408(1) bis 408(n)), die den Strom oder die Leistung in der bestimmten Phase verwendet, und Zuweisen der neu berechneten Leistungsmenge in der bestimmten Phase an jede bestimmte EVSE (312(1) bis 312(n), 408(1) bis 408(n)) zum Laden des mindestens einen EV durch die bestimmten EVSE (312(1) bis 312(n), 408(1) bis 408(n)).

## Revendications

1. Procédé de charge de véhicule électrique (EV) au niveau d'une station de charge de véhicule électrique équipée d'une pluralité d'équipements d'alimentation de véhicule électrique (EVSE) (312(1) à 312(n), 408(1) à 408(n)), le procédé comprenant les étapes consistant à :
effectuer une charge d'au moins un EV par les EVSE (312(1) à 312(n), 408(1) à 408(n)) sous la commande d'un dispositif de commande en nuage (302) ;
déterminer si une consommation de puissance totale correspondant aux EVSE (312(1) à 312(n), 408(1) à 408(n)) est supérieure ou égale à X % d'une capacité de puissance maximale, X étant un nombre réel compris entre 1 et 100 ;
dans lequel la capacité de puissance maximale est une capacité de puissance maximale d'une infrastructure de réseau d'un réseau (308, 406) qui est configuré pour alimenter en puissance les EVSE ;
le procédé étant **caractérisé par** les étapes consistant à :
lorsque la consommation de puissance totale correspondant aux EVSE (312(1) à 312(n), 408(1) à 408(n)) est supérieure ou égale à X % de la capacité de puissance maximale, recalculer une quantité de puissance destinée à chaque EVSE (312(1) à 312(n), 408(1) à 408(n)) par un dispositif de commande périphérique (304, 402) et attribuer la quantité de puissance recalculée à chaque EVSE (312(1) à 312(n), 408(1) à 408(n)) par le dispositif de commande périphérique (304, 402) à des fins de charge de l'au moins un EV par les EVSE (312(1) à 312(n), 408(1) à 408(n)) sous la commande du dispositif de commande périphérique (304, 402) ; et
envoyer des informations de charge de chaque EVSE (312(1) à 312(n), 408(1) à 408(n)) au dispositif de commande en nuage (302) par le dispositif de commande périphérique (304, 402) lors de l'exécution de la charge de l'au moins un EV par les EVSE (312(1) à 312(n), 408(1) à 408(n)) sous la commande du dispositif de commande périphérique (304, 402) ;
dans lequel, lorsque la consommation de puissance totale correspondant aux EVSE (312(1) à 312(n), 408(1) à 408(n)) n'est pas supérieure ou égale à X % de la capacité de puissance maximale, cela signifie qu'il n'y a pas de manque de puissance et une charge par défaut par le dispositif de commande en nuage (302) commence jusqu'à l'apparition d'un manque de puissance ;
dans lequel, lorsque la consommation de puissance totale correspondant aux EVSE (312(1) à 312(n), 408(1) à 408(n)) est supérieure ou égale à X % de la capacité de puissance maximale, cela signifie qu'il y a un manque de puissance et une gestion de charge dynamique est activée ;
dans lequel, lors du processus de la gestion de charge dynamique, la charge par le dispositif de commande en nuage (302) est remplacée par une charge par le dispositif de commande périphérique (304, 402), et la charge d'au moins un EV par les EVSE (312(1) à 312(n), 408(1) à 408(n)) est effectuée sous la commande du dispositif de commande périphérique (304, 402) ;
dans lequel le dispositif de commande périphérique (304, 402) est configuré pour lire des données à partir d'un wattmètre principal (306, 404) et des EVSE (312(1) à 312(n), 408(1) à 408(n)), le wattmètre principal (306, 402) peut lire des informations de réseau du réseau (308, 406), le dispositif de commande en nuage (302) est mis en œuvre par un serveur et le dispositif de commande périphérique (304, 402) est mis en œuvre par un ordinateur, le dispositif de commande en nuage (302) a plus de capacité de calcul que le dispositif de commande périphérique (304, 402).

2. Procédé selon la revendication 1, dans lequel les EVSE (312(1) à 312(n), 408(1) à 408(n)) et un bâtiment (310) sont alimentés en puissance par une ligne de transport d'énergie (320) à partir du réseau (308, 406), la consommation de puissance totale correspondant aux EVSE (312(1) à 312(n), 408(1) à 408(n)) est une somme d'une consommation de puissance du bâtiment (310) et d'une consommation de puissance des EVSE (312(1) à 312(n), 408(1) à 408(n)) ou la consommation de puissance totale correspondant aux EVSE (312(1) à 312(n), 408(1) à 408(n)) est une consommation de puissance du bâtiment (310) comprenant la consommation de puissance des EVSE (312(1) à 312(n), 408(1) à 408(n)).

3. Procédé selon la revendication 1, comprenant en outre les étapes consistant à :
obtenir des données de wattmètre principal en temps réel en provenance [[a]] du wattmètre principal (306) lorsque l'au moins un EV est chargé par l'intermédiaire des EVSE (312(1) à 312(n), 408(1) à 408(n)) ;
dans lequel le fait que la consommation de puissance totale correspondant aux EVSE (312(1) à 312(n), 408(1) à 408(n)) est supérieure ou égale à X % de la capacité de puissance maximale est déterminé conformément aux données de wattmètre principal en temps réel obtenues à partir du wattmètre principal (306) ;
dans lequel les données de wattmètre principal en temps réel se rapportent à la consommation de puissance totale correspondant aux EVSE (312(1) à 312(n), 408(1) à 408(n)), les données de wattmètre principal en temps réel comprennent au moins certains de données de consommation d'énergie en temps réel, de niveaux de tension et de niveaux de courant de chaque phase de la puissance fournie par le réseau (308, 406), et d'utilisation d'énergie dans le temps, le wattmètre principal (306) est mis en œuvre par un wattmètre numérique (404), et le wattmètre principal (306) détecte, à un intervalle de temps, une importation et une exportation d'énergie par rapport à l'infrastructure de réseau.

4. Procédé selon la revendication 1, dans lequel, à l'étape de recalcul de quantité de puissance destinée à chaque EVSE (312(1) à 312(n), 408(1) à 408(n)) par un dispositif de commande périphérique (304, 402) et d'attribution de la quantité de puissance recalculée à chaque EVSE (312(1) à 312(n), 408(1) à 408(n)) par le dispositif de commande périphérique (304, 402) à des fins de charge de l'au moins un EV par les EVSE (312(1) à 312(n), 408(1) à 408(n)) sous la commande du dispositif de commande périphérique (304, 402), chaque EVSE (312(1) à 312(n), 408(1) à 408(n)) se voit attribuer de la puissance de façon égale.

5. Procédé selon la revendication 1, dans lequel, à l'étape d'exécution de charge d'au moins un EV par les EVSE (312(1) à 312(n), 408(1) à 408(n)) sous la commande d'un dispositif de commande en nuage (302), le dispositif de commande en nuage (302) exécute les étapes suivantes consistant à :
générer des données de prédiction de charge obtenues conformément à une pluralité de données de charge historiques, dans lequel toutes les données de charge historiques comprennent une quantité de charge courante et au moins l'un d'un état de séjour de chaque EV et d'un temps de charge de chaque EV ;
obtenir une demande en électricité prédite et une période de séjour prédite de chaque EV par l'intermédiaire des données de prédiction de charge ;
générer une planification de charge, comprenant la fourniture, à chaque EV, d'une quantité de puissance de charge ; et
déterminer une priorité de charge de chaque EV conformément à la demande en électricité prédite et à la période de séjour prédite ;
dans lequel, à l'étape d'envoi d'informations de charge de chaque EVSE (312(1) à 312(n), 408(1) à 408(n)) au dispositif de commande en nuage (302) par le dispositif de commande périphérique (304, 402) lors de l'exécution de la charge de l'au moins un EV par les EVSE (312(1) à 312(n), 408(1) à 408(n)) sous la commande du dispositif de commande périphérique (304, 402), les informations de charge de chaque EVSE (312(1) à 312(n), 408(1) à 408(n)) envoyées au dispositif de commande en nuage (302) par le dispositif de commande périphérique (304, 402) sont utilisées en tant que nouvelles données de charge historiques utilisées par le dispositif de commande en nuage (302) pour générer d'autres données de prédiction de charge de charge de l'au moins un EV par les EVSE (312(1) à 312(n), 408(1) à 408(n)) sous la commande du dispositif de commande en nuage (302) lors d'une itération temporelle suivante.

6. Procédé selon la revendication 1, comprenant en outre les étapes consistant à :
mettre à jour un profil de charge de chaque EVSE (312(1) à 312(n), 408(1) à 408(n)) en générant un nouveau profil de charge pour chaque EVSE (312(1) à 312(n), 408(1) à 408(n)) et envoyer le nouveau profil de charge à chaque EVSE (312(1) à 312(n), 408(1) à 408(n)) par le dispositif de commande périphérique (304, 402) ;
dans lequel le nouveau profil de charge indique la quantité de puissance, ou de courant, attribuée et recalculée pour chaque EVSE (312(1) à 312(n), 408(1) à 408(n)) ;
dans lequel les informations de charge de chaque EVSE (312(1) à 312(n), 408(1) à 408(n)) comprennent au moins l'un d'un état de charge de chaque EV, d'une quantité de puissance de charge de chaque EV et d'une période temporelle de séjour de chaque EV.

7. Procédé selon la revendication 1, dans lequel, lorsque la consommation de puissance totale correspondant aux EVSE (312(1) à 312(n), 408(1) à 408(n)) sur une phase particulière de puissance est supérieure ou égale à X % de la capacité de puissance maximale, le dispositif de commande périphérique (304, 402) recalcule une quantité de courant, ou de puissance, de la phase particulière pour chaque EVSE (312(1) à 312(n), 408(1) à 408(n)) particulier qui utilise du courant, ou de la puissance, sur la phase particulière, et attribue la quantité de puissance recalculée sur la phase particulière à chaque EVSE (312(1) à 312(n), 408(1) à 408(n)) à des fins de charge de l'au moins un EV par les EVSE (312(1) à 312(n), 408(1) à 408(n)) particuliers.

8. Système de charge d'EV au niveau d'une station de charge de véhicule électrique équipée d'une pluralité d'EVSE (312(1) à 312(n), 408(1) à 408(n)), le système comprenant :
un dispositif de commande en nuage (302), configuré pour commander les EVSE (312(1) à 312(n), 408(1) à 408(n)) de façon à mettre en œuvre une charge d'au moins un EV ; et
un dispositif de commande périphérique (304, 402), configuré pour mettre en œuvre les procédures suivantes consistant à :
déterminer si une consommation de puissance totale correspondant aux EVSE (312(1) à 312(n), 408(1) à 408(n)) est supérieure ou égale à X % d'une capacité de puissance maximale, X étant un nombre réel compris entre 1 et 100 ;
dans lequel la capacité de puissance maximale est une capacité de puissance maximale d'une infrastructure de réseau d'un réseau (308, 406) qui est configuré pour alimenter en puissance les EVSE ;
le système étant **caractérisé en ce que** le dispositif de commande périphérique (304, 402) est en outre configuré pour exécuter les procédures suivantes consistant à :
lorsque la consommation de puissance totale correspondant aux EVSE (312(1) à 312(n), 408(1) à 408(n)) est supérieure ou égale à X % de la capacité de puissance maximale, recalculer une quantité de puissance destinée à chaque EVSE (312(1) à 312(n), 408(1) à 408(n)) et attribuer la quantité de puissance recalculée à chaque EVSE (312(1) à 312(n), 408(1) à 408(n)) à des fins de charge de l'au moins un EV par les EVSE (312(1) à 312(n), 408(1) à 408(n)) sous la commande du dispositif de commande périphérique (304, 402) ; et
envoyer des informations de charge de chaque EVSE (312(1) à 312(n), 408(1) à 408(n)) au dispositif de commande en nuage (302) lors de l'exécution d'une charge de l'au moins un EV par les EVSE (312(1) à 312(n), 408(1) à 408(n)) sous la commande du dispositif de commande périphérique (304, 402) ;
dans lequel, lorsque la consommation de puissance totale correspondant aux EVSE (312(1) à 312(n), 408(1) à 408(n)) n'est pas supérieure ou égale à X % de la capacité de puissance maximale, cela signifie qu'il n'y a pas de manque de puissance et une charge par défaut commence par le dispositif de commande en nuage (302) jusqu'à l'apparition d'un manque de puissance ;
dans lequel, lorsque la consommation de puissance totale correspondant aux EVSE (312(1) à 312(n), 408(1) à 408(n)) est supérieure ou égale à X % de la capacité de puissance maximale, cela signifie qu'il y a un manque de puissance et une gestion de charge dynamique est activée ;
dans lequel, lors du processus de la gestion de charge dynamique, la charge par le dispositif de commande en nuage (302) est remplacée par une charge par le dispositif de commande périphérique (304, 402), et la charge d'au moins un EV par les EVSE (312(1) à 312(n), 408(1) à 408(n)) est effectuée sous la commande du dispositif de commande périphérique (304, 402) ;
dans lequel le dispositif de commande périphérique (304, 402) est configuré pour lire des données à partir d'un wattmètre principal (306, 404) et des EVSE (312(1) à 312(n), 408(1) à 408(n)), le wattmètre principal (306, 402) peut lire des informations de réseau du réseau (308, 406), le dispositif de commande en nuage (302) est mis en œuvre par un serveur et le dispositif de commande périphérique (304, 402) est mis en œuvre par un ordinateur, le dispositif de commande en nuage (302) a plus de capacité de calcul que le dispositif de commande périphérique (304, 402).

9. Système selon la revendication 8, dans lequel les EVSE (312(1) à 312(n), 408(1) à 408(n)) et un bâtiment (310) sont alimentés en puissance par une ligne de transport d'énergie (320) à partir du réseau (308, 406), la consommation de puissance totale correspondant aux EVSE (312(1) à 312(n), 408(1) à 408(n)) est une somme d'une consommation de puissance du bâtiment (310) et d'une consommation de puissance des EVSE (312(1) à 312(n), 408(1) à 408(n)) ou la consommation de puissance totale correspondant aux EVSE (312(1) à 312(n), 408(1) à 408(n)) est une consommation de puissance du bâtiment (310) comprenant la consommation de puissance des EVSE (312(1) à 312(n), 408(1) à 408(n)).

10. Système selon la revendication 8, dans lequel le dispositif de commande périphérique (304, 402) est en outre configuré pour obtenir des données de wattmètre principal en temps réel en provenance [[a]] du wattmètre principal (306) lorsque l'au moins un EV est chargé par l'intermédiaire des EVSE (312(1) à 312(n), 408(1) à 408(n)) ;
dans lequel le fait que la consommation de puissance totale correspondant aux EVSE (312(1) à 312(n), 408(1) à 408(n)) est supérieure ou égale à X % de la capacité de puissance maximale est déterminé conformément aux données de wattmètre principal en temps réel obtenues à partir du wattmètre principal (306) ;
dans lequel les données de wattmètre principal en temps réel se rapportent à la consommation de puissance totale correspondant aux EVSE (312(1) à 312(n), 408(1) à 408(n)), les données de wattmètre principal en temps réel comprennent au moins certains de données de consommation d'énergie en temps réel, de niveaux de tension et de niveaux de courant de chaque phase de la puissance fournie par le réseau (308, 406), et d'utilisation d'énergie dans le temps, le wattmètre principal (306) est mis en œuvre par un wattmètre numérique (404), et le wattmètre principal (306) détecte, à un intervalle de temps, une importation et une exportation d'énergie par rapport à l'infrastructure de réseau.

11. Système selon la revendication 8, dans lequel, lors de la procédure de recalcul de la quantité de puissance destinée à chaque EVSE (312(1) à 312(n), 408(1) à 408(n)) et d'attribution de la quantité de puissance recalculée à chaque EVSE (312(1) à 312(n), 408(1) à 408(n)) à des fins de charge de l'au moins un EV par les EVSE (312(1) à 312(n), 408(1) à 408(n)) sous la commande du dispositif de commande périphérique (304, 402), chaque EVSE (312(1) à 312(n), 408(1) à 408(n)) se voit attribuer de la puissance de façon égale.

12. Système selon la revendication 8, dans lequel le dispositif de commande en nuage (302) est en outre configuré pour mettre en œuvre les procédures suivantes consistant à :
générer des données de prédiction de charge obtenues conformément à une pluralité de données de charge historiques, dans lequel toutes les données de charge historiques comprennent une quantité de charge courante et au moins l'un d'un état de séjour de chaque EV et d'un temps de charge de chaque EV ;
obtenir une demande en électricité prédite et une période de séjour prédite de chaque EV par l'intermédiaire des données de prédiction de charge ;
générer une planification de charge, comprenant la fourniture, à chaque EV, d'une quantité de puissance de charge ; et
déterminer une priorité de charge de chaque EV conformément à la demande en électricité prédite et à la période de séjour prédite.

13. Système selon la revendication 12, dans lequel, lors de la procédure d'envoi d'informations de charge de chaque EVSE (312(1) à 312(n), 408(1) à 408(n)) au dispositif de commande en nuage (302) lors de l'exécution d'une charge de l'au moins un EV par les EVSE (312(1) à 312(n), 408(1) à 408(n)) sous la commande du dispositif de commande périphérique (304, 402), les informations de charge de chaque EVSE (312(1) à 312(n), 408(1) à 408(n)) envoyées au dispositif de commande en nuage (302) sont utilisées en tant que nouvelles données de charge historiques utilisées par le dispositif de commande en nuage (302) pour générer d'autres données de prédiction de charge de charge de l'au moins un EV par les EVSE (312(1) à 312(n), 408(1) à 408(n)) sous la commande du dispositif de commande en nuage (302) lors d'une itération temporelle suivante.

14. Système selon la revendication 8, dans lequel le dispositif de commande périphérique (304, 402) est en outre configuré pour mettre en œuvre les procédures suivantes consistant à :
mettre à jour un profil de charge de chaque EVSE (312(1) à 312(n), 408(1) à 408(n)) en générant un nouveau profil de charge pour chaque EVSE (312(1) à 312(n), 408(1) à 408(n)) et envoyer le nouveau profil de charge à chaque EVSE (312(1) à 312(n), 408(1) à 408(n)) ;
dans lequel le nouveau profil de charge indique la quantité de puissance, ou de courant, attribuée et recalculée pour chaque EVSE (312(1) à 312(n), 408(1) à 408(n)) ;
dans lequel les informations de charge de chaque EVSE (312(1) à 312(n), 408(1) à 408(n)) comprennent au moins l'un d'un état de charge de chaque EV, d'une quantité de puissance de charge de chaque EV et d'une période temporelle de séjour de chaque EV.

15. Système selon la revendication 8, dans lequel le dispositif de commande périphérique (304, 402) est en outre configuré pour mettre en œuvre les procédures suivantes consistant à :
lorsque la consommation de puissance totale correspondant aux EVSE (312(1) à 312(n), 408(1) à 408(n)) sur une phase particulière de puissance est supérieure ou égale à X % de la capacité de puissance maximale, recalculer une quantité de courant ou de puissance de la phase particulière pour chaque EVSE (312(1) à 312(n), 408(1) à 408(n)) qui utilise du courant ou de la puissance sur la phase particulière, et attribuer la quantité de puissance recalculée sur la phase particulière à chaque EVSE (312(1) à 312(n), 408(1) à 408(n)) particulier à des fins de charge de l'au moins un EV par les EVSE (312(1) à 312(n), 408(1) à 408(n)) particuliers.
